# EUROPÄISCHE PATENTSCHRIFT

(11) **EP 3 004 556 B1**
(45) Veröffentlichungstag und Bekanntmachung des Hinweises auf die Patenterteilung: **26.09.2018**
(21) Anmeldenummer: 14753034.9
(22) Anmeldetag: 05.08.2014
(51) Int. Cl.: F01D 5/14, F01D 11/08, F01D 11/14, F01D 25/28

(54) **EINSATZELEMENT, RINGSEGMENT, GASTURBINE, MONTAGEVERFAHREN**
INSERT ELEMENT AND GAS TURBINE
ELÉMENT D'INSERTION ET TURBINE À GAZ

(30) Priorität: 09.08.2013 EP 13179892
(43) Veröffentlichungstag der Anmeldung: 13.04.2016
(73) Patentinhaber: Siemens Aktiengesellschaft, 80333 München (DE)
(72) Erfinder: AHMAD, Fathi, 41564 Kaarst (DE); HÄNDLER, Michael, 40699 Erkrath (DE); KAMPKA, Kevin, 45478 Mülheim a. d. Ruhr (DE); KOWALSKI, Christian, 46147 Oberhausen (DE); KOWALZIK, Christian, 13353 Berlin (DE); KURT, Nihal, 40231 Düsseldorf (DE); SCHMITT, Stefan, 45481 Mülheim an der Ruhr (DE); SCHRÖDER, Peter, 45307 Essen (DE)
(86) Internationale Anmeldenummer: PCT/EP2014/066845
(87) Internationale Veröffentlichungsnummer: WO 2015/018841

(56) Entgegenhaltungen:
- EP-A1- 1 990 507
- EP-A2- 1 965 033
- WO-A1-2008/128876
- JP-A- S5 910 706
- US-A1- 2004 047 725
- US-A1- 2011 044 805

## Beschreibung

Die vorliegende Erfindung betrifft eine Gasturbine und ein Montageverfahren.

Es ist bekannt und weit verbreitet, dass Laufschaufelreihen von Turbinen von Gasturbinen am oberen Ende der Schaufelblätter ein sogenanntes Deckband aufweisen.

Die EP 1 965 033 A2 zeigt ein Laufschaufelaußenluftdichtungssegment einer Turbinenmaschine, das einen Körper mit einem Basisteil umfasst. Das Basisteil hat eine quer konkave Innendurchmesser-Fläche, ein vorderes Ende, ein hinteres Ende und eine erste und zweite Umfangskante. Der Körper umfasst zumindest einen Montagehaken. Zumindest eine Deckplatte ist an dem Körper befestigt, um zumindest einen Hohlraum zu definieren. Die Deckplatte umfasst mehrere Zufuhrlöcher. Mehrere Auslasslöcher erstrecken sich durch den Basisteil zu der Innendurchmesser-Fläche. Zumindest das Basisteil oder die Deckplatte weisen einen Vorsprung auf, der in den Hohlraum ragt, um eine Teilabgrenzung zu formen, die einen vorderen und eine hinteren Hohlraumteil separiert.

Aus der EP 1 990 507 A1 ist eine Aufprallkühlstruktur zum Kühlen heißer Wände eines Turbinendeckbands und einer Turbinenstirnwand bekannt. Die Aufprallkühlstruktur umfasst mehrere in einer Umfangsrichtung angeordnete Deckbandelemente zur Formung eines ringförmigen Deckbands, das einen Heißgasstrom umschließt, eine Deckbandabdeckung, die an radialen Außenflächen der Deckbandelemente montiert ist, um einen Hohlraum dazwischen zu bilden. Die Deckbandabdeckung weist ein erstes Prallkühlloch auf, welches mit dem Hohlraum in Verbindung steht und mit dem es Kühlluft erlaubt ist in diesen hinein gedüst zu werden, sodass eine innere Oberfläche des Hohlraums durch Aufprallen zu kühlen ist. Jedes Deckbandelement besitzt einen Lochflügel. Der Lochflügel teilt den Hohlraum in mehrere Unterhohlräume. Ferner umfasst der Lochflügel ein zweites Prallkühlloch, mit dem es der Kühlluft erlaubt ist, durch das erste Prallkühlloch zu strömen um schräg in Richtung einer Bodenfläche eines angrenzenden Unterhohlraums gedüst zu werden.

Die US 2011/044805 A1 offenbart ein Kühlsystem eines Ringsegments einer Gasturbine Das Kühlsystem umfasst eine Aufprallplatte, die mehrere kleine Löcher hat, einen Kühlraum, der durch die Aufprallplatte und einen Hauptkörper eines Segmentkörpers eingeschlossen ist, einen ersten Hohlraum, der in einer stromabwärtigen Endposition des Segmentkörpers in Strömungsrichtung des Verbrennungsgases angeordnet ist, sodass er senkrecht zu einer Axialrichtung einer Rotationswelle steht, einen ersten Kühlkanal, der mit dem Kühlraum und dem ersten Hohlraum in Verbindung steht, und einem zweiten Kühlkanal, der mit dem ersten Hohlraum und einem Brennraum in Verbindung steht, der in einer in Strömungsrichtung des Verbrennungsgases stromabwärtigen Endposition des Segmentkörpers angeordnet ist.

Die WO 2008/128876 A1 betrifft ein Statorhitzeschild für eine Gasturbine sowie eine mit einem derartigen Statorhitzeschild ausgestattete Gasturbine. Das Statorhitzeschild umfasst eine im Einbauzustand einem Heißgaspfad der Gasturbine zugewandte Außenseite, eine von der Außenseite abgewandte Innenseite, mehrere an der Innenseite ausgebildete Rippen, die sich im Einbauzustand bezüglich einer Rotationsachse eines Rotors der Gasturbine axial erstrecken und in Umfangsrichtung zueinander beabstandet sind, wenigstens eine an der Innenseite angeordnete Prallplatte, die auf den Rippen aufliegt, wenigstens eine Nut, die in einer den Statorhitzeschild in Umfangsrichtung begrenzenden Stirnseite ausgebildet ist und in die wenigstens ein Dichtelement einsetzbar ist, sowie mehrere Bohrungen, die jeweils einenends an der Stirnseite von der Nut in Richtung zur Außenseite beabstandet und anderenends an der Innenseite münden, und die in axialer Richtung voneinander beabstandet sind.

Die US 2004/047725 A1 zeigt ein Ringsegment einer Ringform, welche um den äußeren Umfang von Laufschaufeln einer Gasturbine angeordnet ist. Das Ringsegment umfasst einen Schaufelring, eine Hauptwelle und Laufschaufeln mit mehreren Einzeleinheiten, welche eine Ringform dadurch definieren, dass sie um die Umfangsrichtung der Hauptwelle arrangiert sind, und so angeordnet sind, dass deren innere Umfangsfläche in konstantem Abstand zu den Spitzen der Laufschaufeln geführt ist. Dabei sind Vertiefungen, die sich entlang der Axialrichtung der Hauptwelle der Turbine erstrecken, von den Einzeleinheiten so ausgebildet, dass sie sich gegenseitig gegenüberstehen. Das Ringsegment umfasst zudem eine Dichtplatte, welche in jedem gegenüberliegenden Paar der Vertiefungen eingesetzt ist, sodass die angrenzenden Paare der Einzeleinheiten miteinander verbunden sind, und Kontaktflächen, welche an Positionen radial weiter nach innen als die Dichtplatten gebildet sind und sich in Axialrichtung und Umfangsrichtung erstrecken und sich gegenseitig berühren.

In der JP S59-10706 A wird eine weitere Ausführungsform für ein Ringsegment offenbart. Hier ist vorgesehen, dass an einem im Gehäuse in Umfangsrichtung einschiebbaren Segementteil auf der zum Heißgaspfad weisenden Seite ein Deckband angeordnet ist. Dieses wird wiederum in Umfangsrichtung am Segementteil befestigt, wobei das Segementteil eine in Umfangsrichtung verlaufende T-Nut und das Deckband einen T-förmigen Sockel aufweist.

Durch derartige Deckbänder ist es bei Eingriffen an der Laufschaufelreihe, die beispielsweise zu Instandhaltungs- oder Erprobungszwecken erfolgen, notwendig, ein sogenanntes Cover-Lift, also ein Abheben des kompletten oberen Gehäuseteils, vorzunehmen, um Ringsegmente, die um die Laufschaufel herum angeordnet sind, auszutauschen. Ein Cover-Lift ist mit großem Aufwand verbunden.

Der vorliegenden Erfindung liegt die Aufgabe zugrunde, diese Nachteile zu beheben und eine Gasturbine sowie ein Montageverfahren bereitzustellen, sodass es möglich ist, auch eine Laufschaufelreihe ohne Deckband in der Gasturbine zu betreiben.

Gelöst wird diese Aufgabe mit einer Gasturbine nach Anspruch 1 sowie einem Montageverfahren nach Anspruch 9 gelöst.

Vorteilhafte Weiterbildungen der Erfindung sind in den Unteransprüchen angegeben und in der Beschreibung beschrieben.

Erfindungsgemäß ist bei einer Gasturbine mit mehreren Laufschaufelreihen vorgesehen, dass bei derjenigen Laufschaufelreihe, bei der es sich um die stromabwärts der anderen Laufschaufelreihen gelegene handelt, ein darum herum angeordneten Ring aus mehreren Ringsegmenten vorgesehen ist, von denen zumindest eines einen Ringsegmentkörper und ein Einsatzelement umfasst, wobei das Einsatzelement zur Befestigung an einem Ringsegmentkörper einer Turbine einer Gasturbine ist zur Abdeckung einer Aussparung ausgebildet und weist eine Abdeckplatte mit einer konkav geformten Vorderseite und einer Rückseite sowie zumindest einen an der Rückseite angeordneten Fuß zur Positionierung an dem Ringsegmentkörper auf. Der Ringsegmentkörper weist die Aussparung an einer Heißgasseite auf. Der Ringsegmentkörper ist für einen Betrieb mit einer ein Deckband aufweisenden Laufschaufelreihe ausgebildet.

Dabei ist weiterhin vorgesehen, dass das Einsatzelement im montierten Zustand des Ringsegmentkörpers in der Turbine in den Heißgaspfad verbringbar und anschließend an den Ringsegmentkörper anbringbar ist.

Mit dieser Anordnung ist es vorteilhaft ermöglicht eine Gasturbine von einem Betrieb mit einer Laufschaufelreihe mit Deckband auf einen Betrieb mit einer Laufschaufelreihe ohne Deckband umzurüsten ohne dafür neue Ringsegmente einsetzen zu müssen. Ein aufwendiger Cover-Lift bleibt dadurch erspart. Auch eine aufwendige Neuanfertigung passender Ringsegmente kann erspart bleiben.

Damit ist vorteilhaft eine Gasturbine bereitgestellt, die für einen Betrieb mit einer Laufschaufelreihe ohne Deckband geeignet ist. Bei einem Austausch der Laufschaufeln braucht nicht das obere Gehäuse der Gasturbine abgehoben zu werden (Cover-Lift). Ein Zugang von der Auslassseite her genügt. Die erfindungsgemäße Gasturbine eignet sich damit insbesondere für Versuchszwecke, bei denen häufiger Änderungen an den Schaufelblättern vorgenommen werden. Mit der vorliegenden Gasturbine könne diese Versuche erheblich schneller aufgebaut und durchgeführt werden.

Zudem kann die erfindungsgemäße Gasturbine in einfacher Weise für den Betrieb mit einer Laufschaufelreihe mit Deckband umgerüstet werden, indem das zumindest eine Einsatzelement vom Ringsegmentkörper entfernt wird.

In einer vorteilhaften Ausgestaltung des erfindungsgemäßen Einsatzelements weist die Abdeckplatte an einer Unterseite zumindest eine Ausformung zum Einschub in einen Hinterschnitt des Ringsegmentkörpers auf.

Die Ausformung dient einer einfacheren, schnelleren und genaueren Positionierung des Einsatzelements vor einem befestigen des Einsatzelements an dem Ringsegmentkörper. Die Montage ist dadurch vereinfacht und mit weniger Aufwand möglich.

In einer weiteren vorteilhaften Ausgestaltung des erfindungsgemäßen Einsatzelements weist die Abdeckplatte zumindest einen von der Vorderseite zur Rückseite verlaufenden Kanal auf.

Damit kann das Einsatzelement mit entsprechenden Schrauben oder Bolzen in einfacher Weise an dem Ringsegmentkörper befestigt werden.

In einer weiteren vorteilhaften Ausgestaltung des erfindungsgemäßen Einsatzelements ist das Einsatzelement einstückig ausgebildet.

Die Anzahl der Einzelteile ist dadurch verringert. Das erleichtert die Handhabung und spart logistischen Aufwand.

In einer alternativen Ausgestaltung des erfindungsgemäßen Einsatzelements ist das Einsatzelement mehrstückig ausgebildet und die Abdeckplatte ist mit dem zumindest einen Fuß verbindbar.

Dadurch kann zuerst der zumindest eine Fuß des Einsatzelements an dem Ringsegmentkörper und anschließend die Abdeckplatte des Einsatzelements an dem zumindest einen Fuß befestigt werden.

In einer weiteren vorteilhaften Ausgestaltung des erfindungsgemäßen Einsatzelements weist die Abdeckplatte zumindest eine Aufnahmenut und der Fuß eine Schiene mit einer zur Aufnahmenut korrespondierenden Form auf.

Damit können der zumindest eine Fuß und die Abdeckplatte werkzeuglos fest miteinander verbunden werden.

In einer weiteren vorteilhaften Ausgestaltung des erfindungsgemäßen Einsatzelements umfasst das Einsatzelement mehrere Füße und die Füße sind durch eine Fußplatte miteinander verbunden.

Die Füße sind dadurch zueinander unveränderbar positioniert. Bei der Montage an den Ringsegmentkörper können die Füße schnell angeordnet werden. Die Montage des Einsatzelements an den Ringsegmentkörper ist damit vereinfacht.

In einer weiteren vorteilhaften Ausgestaltung des erfindungsgemäßen Einsatzelements weist die Fußplatte zumindest einen die Fußplatte durchbohrenden Kanal auf.

Damit sind die Füße in einfacher Weise mittels Befestigungsmitteln, insbesondere mit Bolzen oder Schrauben an dem Ringsegmentkörper befestigbar.

Das erfindungsgemäße Ringsegment einer Turbine einer Gasturbine umfasst einen Ringsegmentkörper mit einer in montiertem Zustand einem Heißgaspfad zugewandten Heißgasseite. Der Ringsegmentkörper weist an der Heißgasseite eine Aussparung auf. In der Aussparung ein Einsatzelement der zuvor beschriebenen Art angeordnet.

Das Ringsegment ist damit für einen Betrieb einer Laufschaufelreihe ausgebildet, die kein Deckband aufweist

Das erfindungsgemäße Einsatzelement ist bevorzugt in einer Gasturbine integriert.

Bei dem erfindungsgemäßen Montageverfahren wird ein Einsatzelement an einer Aussparung eines Ringsegmentkörpers einer Turbine einer Gasturbine angebracht. Die Aussparung ist dabei an einer Heißgasseite angeordnet, die in montiertem Zustand des Ringsegmentkörpers einem Heißgaspfad der Gasturbine zugewandt ist. Insbesondere wird das Einsatzelement im montierten Zustand des Ringsegmentkörpers in den Heißgaspfad verbracht und anschließend an den Ringsegmentkörper angebracht.

Damit kann ein Ringsegment einer Gasturbine insbesondere für Testzwecke mit geringem Aufwand von einer Auslegung für einen Betrieb mit einer Laufschaufelreihe mit Deckband in eine Auslegung für einen Betrieb mit einer Laufschaufelreihe ohne Deckband umgerüstet werden. Auch ein Zurückbau ist leicht möglich.

Ausführungsbeispiele der Erfindung werden anhand der Zeichnungen und der nachfolgenden Beschreibung näher erläutert. Es zeigen:
- Figur 1: eine erfindungsgemäße Gasturbine,
- Figur 2: ein erfindungsgemäßes Ringsegment,
- Figur 3: ein erfindungsgemäßes Einsatzelement und
- Figur 4: einen Fuß des erfindungsgemäßen Einsatzelements.

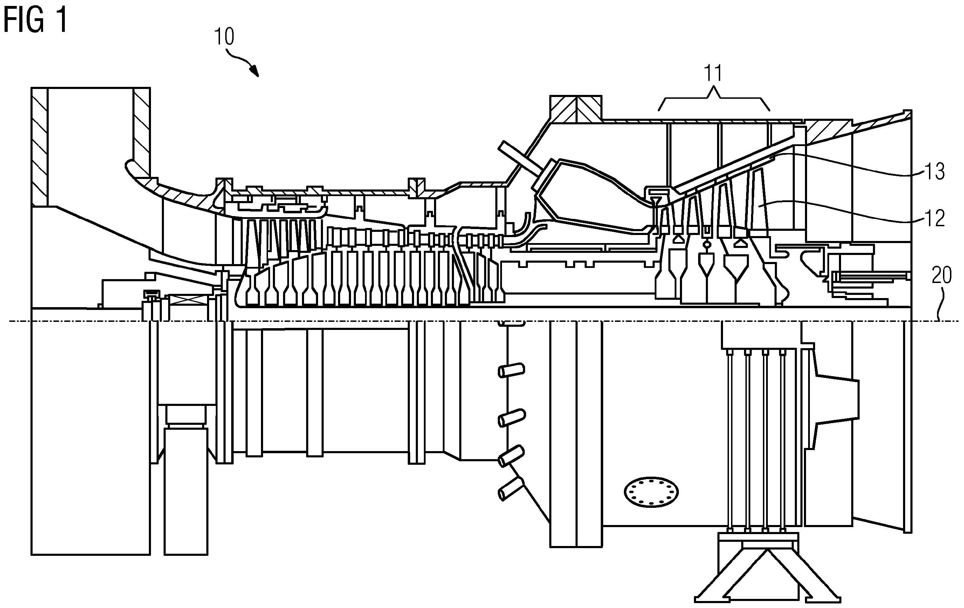

In der Figur 1 ist eine erfindungsgemäße Gasturbine 10 in einer beispielhaften Ausgestaltung skizziert. Die Gasturbine 10 umfasst eine Turbine 11 in der wenigstens eine Laufschaufelreihe 12 angeordnet ist. Um diese Laufschaufelreihe 12 herum ist ein Ring aus mehreren Ringsegmenten angeordnet. Die Laufschaufelreihe 12 ist um eine Rotationsachse 20 drehbar angeordnet.

Bei der Laufschaufelreihe 12 handelt es sich insbesondere um die stromabwärts der anderen Laufschaufelreihen gelegene. In der Figur 1 ist die entsprechende Laufschaufelreihe 12 die vierte Laufschaufelreihe der Turbine 11 der Gasturbine 10.

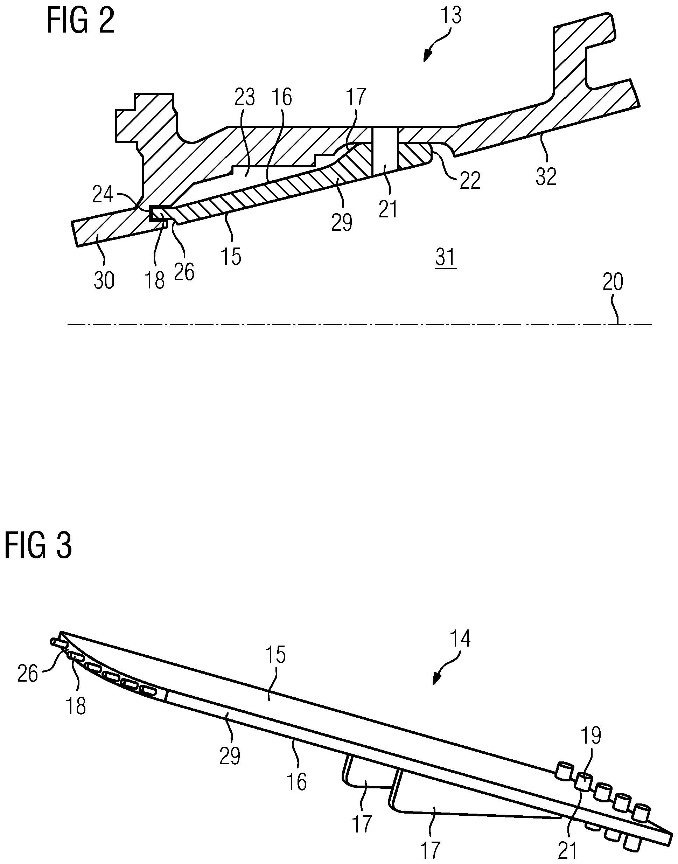

Die erfindungsgemäße Gasturbine 10 weist wenigstens ein erfindungsgemäßes Ringsegment 13 auf. In der Figur 2 ist das Ringsegment 13 in einer beispielhaften Ausgestaltung in einer Schnittdarstellung skizziert.

Das Ringsegment 13 umfasst einen Ringsegmentkörper 30 und ein Einsatzelement 14.

Der Ringsegmentkörper 30 umfasst eine Heißgasseite 32. Die Heißgasseite 32 ist in montiertem Zustand zu einem Heißgaspfad 31 der Gasturbine 10 gerichtet.

Das Einsatzelement 14 deckt eine Aussparung 23 in dem Ringsegmentkörper 30 ab. Die Aussparung ist an der Heißgasseite 32 angeordnet. Diese Aussparung 23 besitzt der Ringsegmentkörper 30 für den Betrieb der Gasturbine 10 mit einer Laufschaufelreihe, die ein Deckband aufweist. Um beispielsweise in einer Erprobungsphase nicht die gesamte obere Gehäusehälfte der Gasturbine abnehmen zu müssen (Cover-Lift) ist es vorteilhaft, die Laufschaufelreihe 12 ohne Deckband zu verwenden. Mittels des erfindungsgemäßen Einsatzelements 14 kann der Ringsegmentkörper 30 an die Laufschaufelreihe 12, die kein Deckband aufweist, angepasst werden.

Die Anpassung erfolgt durch ein erfindungsgemäßes Montageverfahren, bei dem das Einsatzelement 14 an der Aussparung 23 angebracht wird. Insbesondere kann dies erfolgen, während der Ringsegmentkörper 30 bereits in der Gasturbine 10 montiert ist. Dazu wird das Einsatzelement 14 in den Heißgaspfad 31 verbracht und anschließend an dem Ringsegmentkörper 30 angebracht.

In der Figur 3 ist das Einsatzelement 14 in einer beispielhaften Ausgestaltung dargestellt. Das in einer Einzelansicht gezeigte Einsatzelement 14 umfasst eine Abdeckplatte 29 mit einer Rückseite 16 und mit einer konkav geformten Vorderseite 15. Die Vorderseite 15 ist im montierten Zustand dem Heißgaspfad 31 zugewandt. An der Rückseite 16 der Abdeckplatte 29 weist das Einsatzelement 14 zumindest einen Fuß 17 zur Positionierung an dem Ringsegmentkörper 30 auf.

In der gezeigten Ausgestaltung umfasst das Einsatzelement 14 zwei Füße 17. Zudem umfasst das gezeigte Einsatzelement 14 an einer Unterseite 26 mehrere Ausformungen 18. Mit den Ausformungen 18 an der Unterseite 26 kann das Einsatzelement 14 in einen Hinterschnitt 24 des Ringsegmentkörpers 30 geschoben werden. Mit dem zumindest einen Fuß 17 ist das Einsatzelement 14 in seiner Montageposition positioniert. Das in der Figur 3 gezeigte Einsatzelement 14 weist fünf von der Vorderseite 15 zur Rückseite 16 verlaufende Kanäle 21 auf. Die Kanäle 21 dienen der Befestigung des Einsatzelements 14 mit dem Ringsegmentkörper 30. Mittel zum Befestigen des Einsatzelements 14 werden dabei durch die Kanäle 21 geführt. In der Figur 3 sind entsprechend der Anzahl der Kanäle 21 fünf Bolzen 19 als Befestigungsmittel dargestellt. Die Bolzen 19 sind insbesondere Gewindebolzen oder Schrauben. Das Einsatzelement 14 ist in montiertem Zustand fest mit dem Ringsegmentkörper 30 verbunden. Das Einsatzelement 14 schließt im montierten Zustand bevorzugt bündig mit dem Ringsegmentkörper 30 ab. Durch die Montage des Einsatzelements 14 an dem Ringsegmentkörper 30 ist ein erfindungsgemäßes Ringsegment 13 hergestellt.

Die Vorderseite 15 der Abdeckplatte 29 des erfindungsgemäßen Einsatzelements 14 ist konkav ausgeführt und damit den um die Laufschaufelreihe 12 herum angeordneten Ringsegmenten 13 angepasst. Im montierten Zustand ist die konkave Krümmung der Vorderseite 15 quer zur Rotationsachse 20 ausgebildet.

Das Einsatzelement 14 kann je Kanal 21 eine koaxial zum Kanal 21 angeordnete Senkung aufweisen. Das Befestigungsmittel zur Befestigung des Einsatzelements 14, insbesondere der Kopf einer Schraube, kann in der Senkung angeordnet sein um nicht aus der Kontur des Eisatzelements 14 herauszustehen.

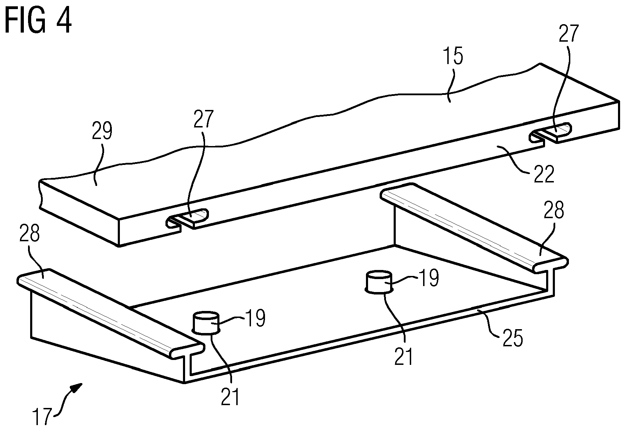

Das erfindungsgemäße Einsatzelement 14 kann einstückig ausgeführt sein. Der zumindest eine Fuß 17 ist dann monolithisch mit der Abdeckplatte 29 ausgebildet. Das erfindungsgemäße Einsatzelement 14 kann alternativ dazu auch mehrstückig ausgebildet sein. Die Abdeckplatte 29 ist dann mit dem zumindest einen Fuß 17 verbindbar, insbesondere auf den zumindest einen Fuß 17 aufschiebbar. In der Figur 4 ist eine derartige Ausgestaltung des erfindungsgemäßen Einsatzelements 14 skizziert.

In der gezeigten Ausgestaltung verfügt das Einsatzelement 14 über zwei Füße 17, die mittels einer Fußplatte 25 miteinander verbunden sind. Die Fußplatte 25 weist in der gezeigten Ausführung zwei Kanäle 21 auf. Durch diese Kanäle 21 hindurch können Befestigungsmittel zur Befestigung der Fußplatte 25 an dem Ringsegmentkörper 30 geführt werden. In der Figur 4 sind Bolzen 19 als Befestigungsmittel dargestellt. Das mehrteilig ausgestaltete Einsatzelement 14 bietet die Möglichkeit zuerst den zumindest einen Fuß 17 an dem Ringsegmentkörper 30 zu befestigen und anschließend die Abdeckplatte 29 an dem Fuß 17 zu befestigen. Insbesondere können die Abdeckplatte 29 und der zumindest eine Fuß 17 in der Weise ausgeführt sein, dass die Abdeckplatte 29 auf den zumindest einen Fuß 17 aufschiebbar ist. In der in Figur 4 gezeigten Ausgestaltung weisen die beiden Füße 17 dazu jeweils eine Schiene 28 auf und die Abdeckplatte 29 umfasst zwei Aufnahmenuten 27. Die Aufnahmenuten 27 sind von einer Oberseite 22 her zugänglich. Die Schienen 28 und die Aufnahmenuten 27 weisen jeweils korrespondierende Formen auf. Nach dem Aufschieben der Abdeckplatte 29 auf den zumindest einen Fuß 17 ist die Schiene 28 in der Aufnahmenut 27 angeordnet, wodurch die Abdeckplatte 29 an dem zumindest einen Fuß 17 befestigt ist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, wie durch die angehängten Ansprüche definiert wird.

## Patentansprüche

1. Gasturbine (10) mit einer eine Laufschaufelreihe (12) und einen um die Laufschaufelreihe (12) herum angeordneten aus mehreren Ringsegmenten aufgebauten Ring aufweisenden Turbine (11),
wobei sich die Laufschaufelreihe (12) um die stromabwärts der anderen Laufschaufelreihen gelegene handelt und wobei zumindest ein Ringsegment (13) einen Ringsegmentkörper (30) mit einer in montiertem Zustand einem Heißgaspfad (31) zugewandten Heißgasseite (32) sowie ein Einsatzelement (14) umfasst,
wobei der Ringsegmentkörper (30) an der Heißgasseite (32) eine Aussparung (23) aufweist, in der das Einsatzelement (14) angeordnet ist,
welches zur Abdeckung der Aussparung (23) ausgebildet ist und eine Abdeckplatte (29) mit einer konkav geformten Vorderseite (15) und einer Rückseite (16) sowie zumindest einen an der Rückseite (16) angeordneten Fuß (17) zur Positionierung an dem Ringsegmentkörper (30) aufweist, **dadurch gekennzeichnet, dass**
das Einsatzelement (14) im montierten Zustand des Ringsegmentkörpers (25) in der Turbine in den Heißgaspfad (26) verbringbar und anschließend an den Ringsegmentkörper (25) anbringbar ist.

2. Gasturbine (10) nach Anspruch 1,
wobei die Abdeckplatte (29) an einer Unterseite (26) zumindest eine Ausformung (18) zum Einschub in einen Hinterschnitt (24) des Ringsegmentkörpers (30) aufweist.

3. Gasturbine (10) nach Anspruch 1 oder 2,
wobei die Abdeckplatte (29) zumindest einen von der Vorderseite (15) zur Rückseite (16) verlaufenden Kanal (21) aufweist.

4. Gasturbine (10) nach einem der Ansprüche 1 bis 3,
wobei das Einsatzelement (14) einstückig ausgebildet ist.

5. Gasturbine (10) nach einem der Ansprüche 1 bis 3,
wobei das Einsatzelement (14) mehrstückig ausgebildet und die Abdeckplatte (29) mit dem zumindest einen Fuß (17) verbindbar ist.

6. Gasturbine (10) nach Anspruch 5,
wobei die Abdeckplatte (29) zumindest eine Aufnahmenut (27) und der Fuß (17) eine Schiene (28) mit einer zur Aufnahmenut (27) korrespondierenden Form aufweist.

7. Gasturbine (10) nach Anspruch 5 oder 6,
wobei das Einsatzelement (14) mehrere Füße (17) umfasst und die Füße (17) durch eine Fußplatte (25) miteinander verbunden sind.

8. Gasturbine (10) nach Anspruch 7,
wobei die Fußplatte (25) zumindest einen die Fußplatte (25) durchbohrenden Kanal (21) aufweist.

9. Montageverfahren,
bei dem ein Einsatzelement (14) an einer Aussparung (23) eines Ringsegmentkörpers (30) einer Turbine (11) einer Gasturbine nach Anspruch 1 angebracht wird, wobei die Aussparung (23) an einer in montiertem Zustand des Ringsegmentkörpers (30) einem Heißgaspfad (31) der Gasturbine (10) zugewandten Heißgasseite (32) angeordnet ist, **gekennzeichnet durch** den Schritt, dass das Einsatzelement (14) im montierten Zustand des Ringsegmentkörpers (25) in den Heißgaspfad (26) verbracht und anschließend an den Ringsegmentkörper (25) angebracht wird.

## Claims

1. Gas turbine (10) with a turbine (11) having a rotor blade row (12) and a ring that is arranged around the rotor blade row (12) and is made up of multiple ring segments,
wherein the rotor blade row (12) is the one situated downstream of the other rotor blade rows and
wherein at least one ring segment (13) comprises a ring segment body (30) having a hot gas side (32) which, in the mounted state, is oriented toward a hot gas path (31), and an insert element (14),
wherein the ring segment body (30) has, on the hot gas side (32), a recess (23) in which is arranged the insert element (14),
which is designed to cover the recess (23) and has a cover plate (29) with a concave front side (15) and a rear side (16) and at least one foot (17), arranged on the rear side (16), for positioning on the ring segment body (30),
**characterized in that**,
in the mounted state of the ring segment body (30) in the turbine, the insert element (14) can be introduced into the hot gas path (31) and can then be fixed to the ring segment body (30) .

2. Gas turbine (10) according to Claim 1,
wherein the cover plate (29) has, on an underside (26), at least one shaped portion (18) to be pushed into an undercut (24) of the ring segment body (30).

3. Gas turbine (10) according to Claim 1 or 2,
wherein the cover plate (29) has at least one passage (21) running from the front side (15) to the rear side (16).

4. Gas turbine (10) according to one of Claims 1 to 3, wherein the insert element (14) is of one-piece design.

5. Gas turbine (10) according to one of Claims 1 to 3, wherein the insert element (14) is of multi-piece design and the cover plate (29) can be connected to the at least one foot (17) .

6. Gas turbine (10) according to Claim 5,
wherein the cover plate (29) has at least one receiving slot (27) and the foot (17) has a rail (28) whose shape corresponds to the receiving slot (27).

7. Gas turbine (10) according to Claim 5 or 6, wherein the insert element (14) comprises multiple feet (17) and the feet (17) are connected to one another by a foot plate (25).

8. Gas turbine (10) according to Claim 7,
wherein the foot plate (25) has at least one passage (21) through the foot plate (25).

9. Mounting method,
in which an insert element (14) is fixed to a recess (23) of a ring segment body (30) of a turbine (11) of a gas turbine according to Claim 1,
wherein the recess (23) is arranged on a hot gas side (32) which, in the mounted state of the ring segment body (30), is oriented toward a hot gas path (31) of the gas turbine (10), **characterized by** the step that,
in the mounted state of the ring segment body (30), the insert element (14) is introduced into the hot gas path (31) and is then fixed to the ring segment body (30).

## Revendications

1. Turbine à gaz (10), comprenant une turbine (11) ayant une rangée (12) d'aubes mobiles et une couronne disposée autour de la rangée (12) d'aubes mobiles et formée de plusieurs segments de couronne,
dans laquelle la rangée (12) d'aubes mobiles est celle en aval des autres rangées d'aubes mobiles et
dans laquelle au moins un segment (13) de couronne comprend une pièce (30) de segment de couronne, ayant un côté (32) de gaz chaud tourné, à l'état monté, vers le trajet (31) de gaz chaud ainsi qu'un élément (14) d'insertion,
dans laquelle la pièces (30) de segment de couronne a, du côté (32) du gaz chaud, un évidement (23), dans lequel l'élément (14) d'insertion est disposé,
lequel est constitué pour recouvrir l'évidement (23) et a une plaque (29) de recouvrement à face (15) avant concave et à face (16) arrière ainsi qu'au moins un piètement (17) disposé sur la face (16) arrière pour la mise en position sur la pièce (30) de segment de couronne,
**caractérisé en ce que**
l'élément (14) d'insertion peut, lorsque la pièce (25) de segment de couronne est à l'état monté dans la turbine, passer dans le trajet (26) de gaz chaud et ensuite être mis sur la pièce (25) de segment de couronne.

2. Turbine à gaz (10) suivant la revendication 1,
dans laquelle la plaque (29) de recouvrement a, sur une face (26) inférieure, au moins une partie (18) saillante à insérer dans une contre-dépouille (24) de la pièce (30) de segment de couronne.

3. Turbine à gaz (10) suivant la revendication 1 ou 2,
dans laquelle la plaque (29) de recouvrement a au moins un canal (21), s'étendant de la face (15) avant à la face (16) arrière.

4. Turbine à gaz (10) suivant l'une des revendications 1 à 3,
dans laquelle l'élément (14) d'insertion est constitué d'une seule pièce.

5. Turbine à gaz (10) suivant l'une des revendications 1 à 3,
dans laquelle l'élément (14) d'insertion est constitué en plusieurs pièces et la plaque (29) de recouvrement peut être reliée au au moins un piètement (17.

6. Turbine à gaz (10) suivant la revendication 5,
dans laquelle la plaque (29) de recouvrement a au moins une rainure (27) de réception et le piètement (17), une barre (28) de forme correspondant à la rainure (27) de réception.

7. Turbine à gaz (10) suivant la revendication 5 ou 6,
dans laquelle l'élément (14) d'insertion comprend plusieurs piètements (17) et les piètements (17) sont reliés entre eux par une plaque (25) de piètement.

8. Turbine à gaz (10) suivant la revendication 7,
dans laquelle la plaque (25) de piètement a au moins un canal (21) traversant la plaque (25) de piètement.

9. Procédé de montage,
dans lequel on met un élément (14) d'insertion sur un évidement (23) d'une pièce (30) de segment de couronne d'une turbine (11) d'une turbine à gaz suivant la revendication 1,
dans lequel l'évidement (23) est disposé d'un côté (32) de gaz chaud tourné, lorsque la pièce (30) de segment de couronne est à l'état monté, vers un trajet (31) de gaz chaud de la turbine à gaz (10), **caractérisé par** le stade de faire passer l'élément (14) d'insertion, alors que la pièce (25) de segment de couronne est à l'état monté, dans le trajet (26) de gaz chaud et ensuite de le mettre sur la pièce (25) de segment de couronne.
